# EUROPÄISCHE PATENTANMELDUNG

(11) **EP 1 589 641 A2**
(43) Veröffentlichungstag der Anmeldung: **26.10.2005**
(21) Anmeldenummer: 05007907.8
(22) Anmeldetag: 11.04.2005
(51) Int. Cl.: H02K 29/08

(54) **Bürstenloser Gleichstrommotor und Verfahren zum Justieren einer Sensorvorrichtung in einem bürstenlosen Gleichstrommotor**

(30) Priorität: 22.04.2004 DE 102004019636
(71) Anmelder: MINEBEA Co., Ltd., Kitasaku-gun, Nagano-ken 3849-2100 (JP)
(72) Erfinder: Schill, Jürgen, 78073 Bad Dürrheim (DE)
(74) Vertreter: Liesegang, Eva

(57) **Zusammenfassung**

Die Erfindung betrifft einen bürstenlosen Gleichstrommotor mit einem Stator, einem Rotor, einem Steuermagneten, der mit dem Rotor drehfest verbunden ist, einer Sensorvorrichtung, die mit dem Steuermagneten zur Erzeugung eines Kommutierungssignals zusammenwirkt, wenigstens einem Trägerbauteil, das die Sensorvorrichtung trägt, und einer Haltevorrichtung zum Aufnehmen des Stators, die mit dem Trägerbauteil verbunden und relativ zu dem Trägerbauteil verdrehbar ist, um die Lage der Sensorvorrichtung relativ zu dem Stator zu justieren.

## Beschreibung

Die Erfindung betrifft allgemein das Gebiet der bürstenlosen Gleichstrommotoren und spezieller ein Verfahren zum Justieren einer Sensorvorrichtung in einem bürstenlosen Gleichstrommotor.

Solche Motoren können in unterschiedlichsten technischen Bereichen zur Anwendung kommen, beispielsweise in der Automobiltechnik für Antriebe zur Unterstützung der Lenkung, des Bremssystems oder als Motoren für Pumpen oder Gebläse. Andere Anwendungsbereich sind Lüftergebläse in Netzteilen, Antriebsmotoren in Industriemaschinen etc., um nur einige wenige Beispiele zu nennen.

Ein elektronisch kommutierter, bürstenloser Gleichstrommotor umfaßt grundsätzlich eine Welle, eine Rotorbaugruppe, die einen oder mehrere auf der Welle angeordnete Permanentmagnete umfaßt, und eine Statorbaugruppe, die einen Statorkörper und Phasenwicklungen aufweist, welche mit den magnetischen Polen des Rotors in Wechselwirkung stehen. Zwei Lager sind in axialem Abstand an der Welle angeordnet, um die Rotorbaugruppe und die Statorbaugruppe relativ zueinander zu lagern.

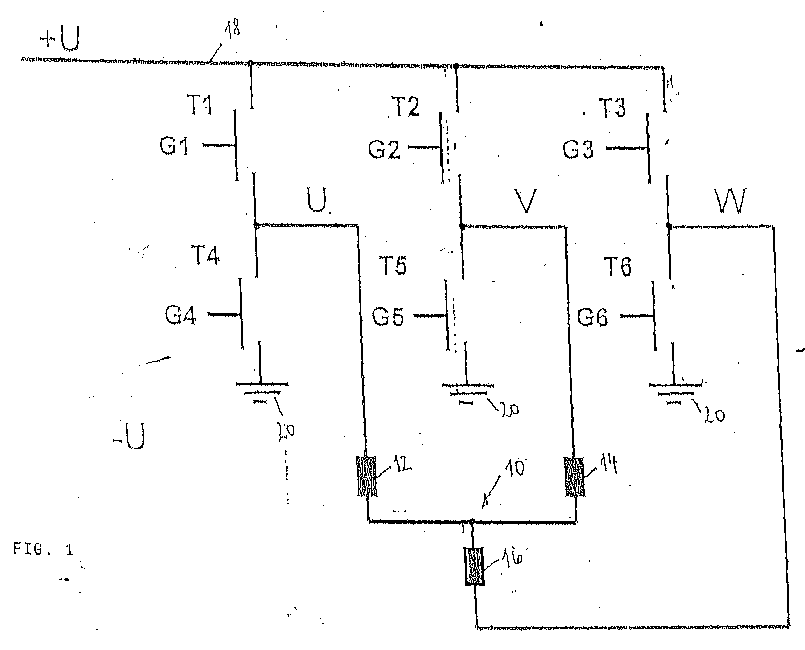

Fig. 1 zeigt ein schematisches Schaltbild einer Ansteuerelektronik für einen dreiphasigen Gleichstrommotor. Der Gleichstrommotor umfaßt drei Phasenwicklungen U, 12; V, 14; W, 16, die in Fig. 1 schematisch in Sternschaltung 10 dargestellt sind. Die drei Wicklungen 12, 14, 16 sind zwischen einer positiven Versorgungsschiene 18 und einer negativen Versorgungsschiene 20 angeschlossen. Die positive Versorgungsschiene 18 führt das Potential +U, und die negative Versorgungsschiene 20 führt das Potential -U. Die Phasenwicklungen 12, 14, 16 werden über sechs Leistungs-Schaltbauteile T1 bis T6 nach Maßgabe von Steuersignalen mit den Versorgungsschienen 18, 20 verbunden. Die Leistungs-Schaltbauteile T1 bis T6 sind z.B. Leistungstransistoren. Sie weisen Steueranschlüsse auf, die in Fig. 1 mit G1 bis G6 bezeichnet sind. Die Steueranschlüsse entsprechen insbesondere den Gates der Leistungstransistoren. Durch Anlegen geeigneter Steuersignale an die Gates der Leistungstransistoren werden die Phasenwicklungen 12 bis 16 des Gleichstrommotors bestromt, um dessen Betrieb zu steuern. Verfahren zum Steuern eines bürstenlosen elektronisch kommutierten Gleichstrommotors sind beispielsweise beschrieben in DE 10033561 A1 und U.S. 6,400,109 B1, auf die Bezug genommen wird. Entsprechend ist eine Anordnung der drei Wicklungen in einer Dreieckschaltung möglich (nicht zeichnerisch dargestellt).

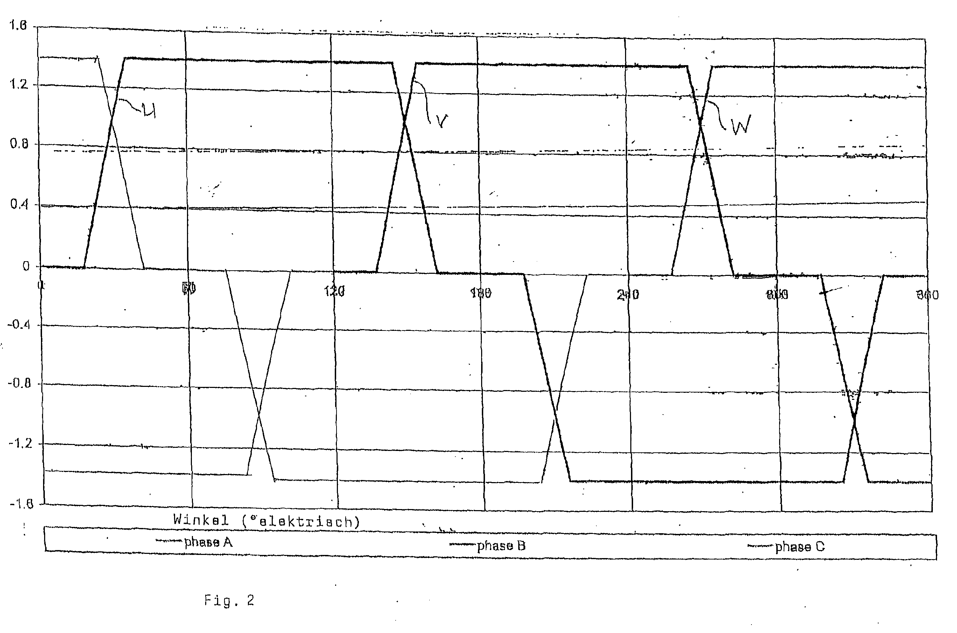

Bei Gleichstrommotoren, insbesondere dreiphasigen Gleichstrommotoren wie sie in industriellen Anwendungen und in der Automobiltechnik zum Einsatz kommen, unterscheidet man zwischen einer "blockförmigen" und einer "sinusförmigen" Bestromung der Phasen des Motors. "Blockförmige" Bestromung bedeutet, daß der Strom, der an die Phasenwicklungen angelegt wird, einen rechteckförmigen Verlauf hat. Der Strom wird zu einem Zeitpunkt auf einen gegebenen Wert eingeschaltet und zu einem anderen Zeitpunkt wieder abgeschalt. Solche Motoren haben üblicherweise eine trapezförmige induzierte Spannung. Fig. 2 zeigt schematisch die induzierten Spannungen eines "blockförmig" bestromten oder "blockkommutierten" Motors. Im Betrieb sollte die Umschaltung der Phasenströme dann erfolgen, wenn sich jeweils zwei induzierte Spannungen schneiden, um eine minimale Drehmomentwelligkeit zu erzeugen. Hierzu wird eine Information über die jeweilige Rotorlage benötigt, um die Phasenströme zum richtigen Zeitpunkt umzuschalten.

Im Stand der Technik werden zur Erfassung der Rotorlage häufig Hall-Sensoren eingesetzt, die an einem feststehenden Trägerbauteil in dem Gleichstrommotor angebracht sind und mit Steuermagneten zusammenwirken. Die Steuermagnete können an einer Stirnseite des Rotors angebrachte separate Steuermagnete sein oder durch die Arbeitsmagnete des Rotors selbst gebildet werden. Zur Erfassung der Drehlage des Rotors können für einen dreiphasigen Gleichstrommotor beispielsweise drei Hall-Sensoren um 120° (elektrisch) phasenversetzt um den Umfang der Motorwelle angeordnet werden. Die Hall-Sensoren erzeugen abhängig von der Rotordrehung Drehlagesignale, welche es ermöglichen, die notwendigen Kommutierungssignale zum Umschalten der Bestromung der einzelnen Phasenwicklungen abzuleiten. Hierzu ist es jedoch notwendig, daß die Lage der Hallsensoren im Verhältnis zu den Statorpolen richtig eingestellt ist.

In der Praxis sind die Hall-Sensoren häufig auf einer Leiterplatte aufgebracht, die beispielsweise an einem Flansch des Gleichstrommotors, der Stirnseite des Rotors gegenüberliegend befestigt ist. Bei dem Zusammenbau des Gleichstrommotors muß darauf geachtet werden, daß die Lage der Hall-Sensoren im Verhältnis zu den Polen des Stators richtig eingestellt ist. Die Einstellung und Justierung der relativen Lage kann wie folgt durchgeführt werden:

Während des Betriebs des Gleichstrommotors wird die mittlere Stromaufnahme des Motors in Abhängigkeit von der relativen Lage zwischen der Leiterplatte, welche die Hall-Sensoren trägt, und dem Stator ermittelt. Die relative Lage der Leiterplatte und somit der Hall-Sensoren zu dem Stator wird so eingestellt, daß die Stromaufnahme des Motors minimal ist.

Nach dem Justieren der Leiterplatte ist es möglich, aus den Drehlagesignalen der Hall-Sensoren die Rotorlage relativ zu dem Stator zu bestimmen und abhängig davon die gewünschten Kommutierungssignale abzuleiten.

In der Praxis ist es jedoch nicht immer möglich, die Leiterplatte bzw. ein die Leiterplatte haltendes Trägerbauteil, wie einen Flansch, beliebig zu verdrehen. Beispielsweise können die Leiterplatte und das Trägerbauteil im Motorgehäuse schwer zugänglich sein. Es ist auch denkbar, daß ein Trägerflansch nicht rund, sondern mehreckig ausgestaltet ist und aufgrund mechanischer Gegebenheiten nicht beliebig gedreht werden kann.

Es ist die Aufgabe der Erfindung, einen bürstenlosen Gleichstrommotor anzugeben, in dem eine Sensorvorrichtung problemlos justiert werden kann.

Diese Aufgabe wird durch einen bürstenlosen Gleichstrommotor mit den Merkmalen von Patentanspruch 1 (sowie durch ein Verfahren mit den Merkmalen von Patentanspruch 12) gelöst.

Die Erfindung sieht einen bürstenlosen Gleichstrommotor vor, mit einem Stator, einem Rotor, einem Steuermagneten, der mit dem Rotor drehfest verbunden ist, und einer Sensorvorrichtung, die mit dem Steuermagneten zur Erzeugung eines Kommutierungssignals zusammenwirkt. Die Sensorvorrichtung ist auf einem Trägerbauteil angeordnet, das in oder an dem Gehäuse des Gleichstrommotors ortsfest montiert ist. Erfindungsgemäß ist eine Haltevorrichtung zum Aufnehmen des Stators vorgesehen, die mit dem Trägerbauteil verbunden und relativ zu dem Trägerbauteil verdrehbar ist, um die Lage der Sensorvorrichtung auf dem Trägerbauteil relativ zu dem Stator zu justieren. Erfindungsgemäß wird somit ein Gleichstrommotor geschaffen, in dem die Sensorvorrichtung ortsfest montiert ist, während der Stator relativ zur Sensorvorrichtung verdreht werden kann, um die Lage der Sensoren zu justieren. Bei dem erfindungsgemäßen Gleichstrommotor ist es somit möglich, eine im Motorgehäuse, insbesondere an einem Motorflansch, fest montierte Sensorvorrichtung vorzusehen und gleichwohl noch diese Sensorvorrichtung in ihrer Lage relativ zum Stator zu justieren, indem nicht die Sensoren, sondern der Stator gedreht wird. Erfindungsgemäß wird hierzu als Haltevorrichtung vorzugsweise ein Rohrstück vorgesehen, in welches der Stator eingebracht wird. Der Stator kann in dem Rohrstück beispielsweise eingeklebt oder auf andere Weise darin gehalten sein. Dieses Rohrstück kann Teil des Gehäuses des Gleichstrommotors bilden und wird relativ zu dem Trägerbauteil drehbar gehalten. In einer bevorzugten Ausführung der Erfindung wird das Trägerbauteil durch einen Flansch des Gleichstrommotors gebildet, der einen Zentrierbund zum Aufnehmen des Rohrstücks aufweist, um das Rohrstück in dem Flansch drehbar zu halten.

Um die Sensorvorrichtung in ihrer Lage relativ zum Stator nach der Justierung zu fixieren, weist der erfindungsgemäße Gleichstrommotor geeignete Befestigungsmittel, wie Madenschrauben oder dergleichen, auf.

In einer Ausführung der Erfindung wird das Trägerbauteil durch einen Flansch mit polygonaler und insbesondere quadratischer Außenkontur gebildet, der zu einem zweiten Flansch auf der gegenüberliegenden Stirnseite des Motors fluchtet; die Sensorvorrichtung ist auf eine Leiterplatte aufgebracht, welche an diesem Flansch befestigt ist. In dieser Ausführung ist es besonders günstig, wenn die Sensorvorrichtung relativ zum Stator justiert werden kann, ohne die Sensorvorrichtung und somit den Flansch zu verdrehen, weil ansonsten die beiden Flansche nicht mehr miteinander fluchten würden. In einer anderen Ausführung der Erfindung ist die Sensorvorrichtung auf einem separaten Träger im Inneren des Gehäuses des Gleichstrommotors aufgebracht, der nach der Montage des Gleichstrommotors schwer zugänglich ist, so daß auch für diese Ausführung die erfindungsgemäße Justierung der Sensorvorrichtung durch Drehen des Stators vorteilhaft ist.

Erfindungsgemäß umfaßt die Sensorvorrichtung vorzugsweise Hall-Sensoren, beispielsweise bei einem dreiphasigen Gleichstrommotor drei in einem Winkel von 120° (elektrisch) versetzte Hall-Sensoren. Die Steuermagnete können durch die Arbeitsmagnete des Rotors oder durch separate Steuermagnete, die beispielsweise an einer Stirnseite des Rotors positioniert sind, gebildet sein.

Die Erfindung ist im folgenden anhand einer bevorzugten Ausführung mit Bezug auf die Zeichnungen näher erläutert.

In den Figuren zeigen:
- Fig. 1: ein Schaltbild einer Ansteuerelektronik für einen dreiphasigen Gleichstrommotor;
- Fig. 2: den Verlauf der induzierten Spannungen eines blockförmig bestromten dreiphasigen Gleichstrommotors;
- Fig. 3: eine schematische Außenansicht eines Gleichstrommotors gemäß der Erfindung;
- Fig. 4: eine Längsschnittdarstellung durch den Gleichstrommotor der Fig. 3;
- Fig. 5: eine Querschnittdarstellung durch den Gleichstrommotor der Fig. 3 und 4 entlang der Linie A-A;
- Fig. 6: eine Teilschnittdarstellung durch den Elektromotor der Fig. 3 und 4 entlang der Linie C-C; und
- Fig. 7: einen Graphen des Motorstroms abhängig von der Justierung der Sensorvorrichtung zur Erläuterung des erfindungsgemäßen Verfahrens.

Fig. 1, die bereits beschrieben wurde, zeigt ein schematisches Schaltbild einer Ansteuerelektronik für einen dreiphasigen Gleichstrommotor. Zur Bestromung der drei Phasen U 12, V 14 und W 16 des Gleichstrommotors werden die Transistoren T1 bis T6, über ihre Gates G1 bis G6 angesteuert. Die Steuerzeitpunkte werden bestimmt durch die Ausgangssignale der Sensorvorrichtung, die erfindungsgemäß justiert ist.

Fig. 2 zeigt die induzierten Spannungen eines dreiphasigen Gleichstrommotors mit blockförmiger Bestromung oder Kommutierung, wobei die induzierten Spannungen der drei Phasen mit u, v bzw. w bezeichnet sind. In Fig. 2 ist ein elektrischer Zyklus von 360° der Bestromungsphase dargestellt.

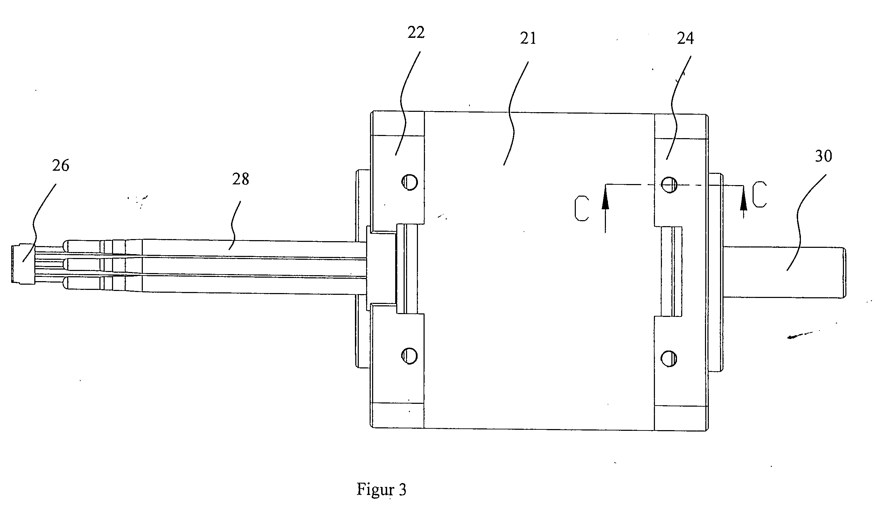

Fig. 3 zeigt eine Außenansicht einer Ausführung des erfindungsgemäßen Gleichstrommotors. In Fig. 3 dargestellt sind ein Gehäuserohr 21, das an seinen beiden Stirnenden durch einen ersten Flansch 22 und einen zweiten Flansch 24 abgeschlossen ist. Auf der Seite des ersten Flansches 22 sind Signalleitungen 26 und Anschlüsse für die Stromversorgung 28 des Gleichstrommotors herausgeführt, und auf der Seite des zweiten Flansches 24 ist das Abtriebsende der Welle 30 dargestellt.

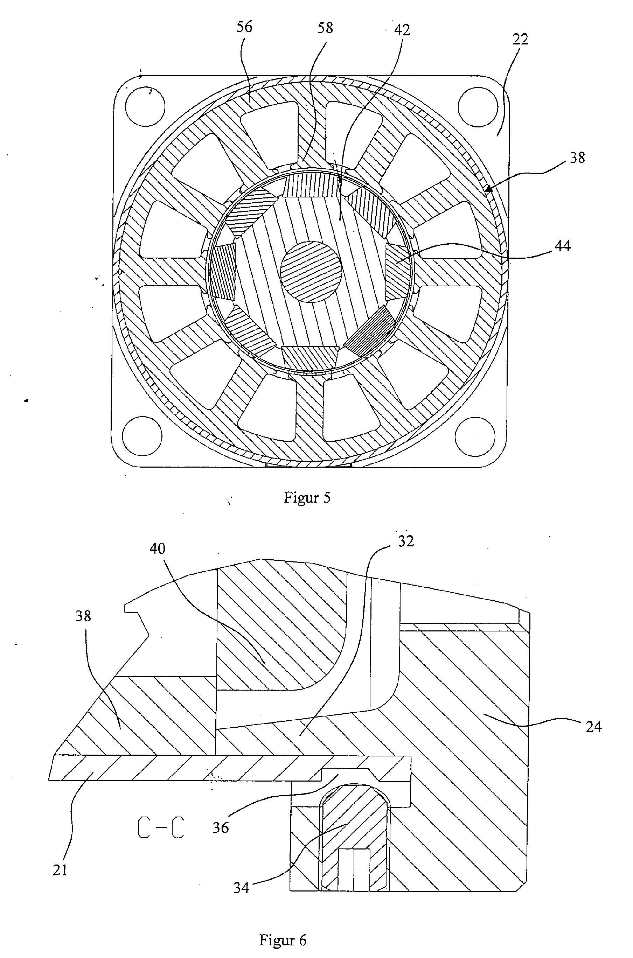

Wie in der vergrößerten Teilschnittdarstellung der Fig. 6 zu erkennen, ist das Gehäuserohr 21 in den Flanschen 22, 24 über einen Zentrierbund 32 gehalten, wobei in Fig. 6 nur das abtriebsseitige Ende des Gleichstrommotors mit dem Flansch 24 dargestellt ist. Die Verbindung zwischen Gehäuserohr 21 und Flansch 22 an dem anderen Stirnende des Motors entspricht der Darstellung der Fig. 6 spiegelbildlich. Wie in Fig. 6 zu sehen, ist das Gehäuserohr 21 auf den Zentrierbund 32 aufgeschoben und kann daran mittels einer Fixiervorrichtung 34, bei der gezeigten Ausführungsform eine Madenschraube, fixiert werden. Hierzu ist in der Nähe des Stirnendes des Gehäuserohrs 21 eine Nut 36 ausgebildet, in welche die Madenschraube 34 eingreift. In der Darstellung der Fig. 6 sind ferner ein Teil eines Statorkörpers 38 und der darauf aufgebrachten Phasenwicklung 40, welche in dem Gehäuserohr 20 gehalten werden, dargestellt.

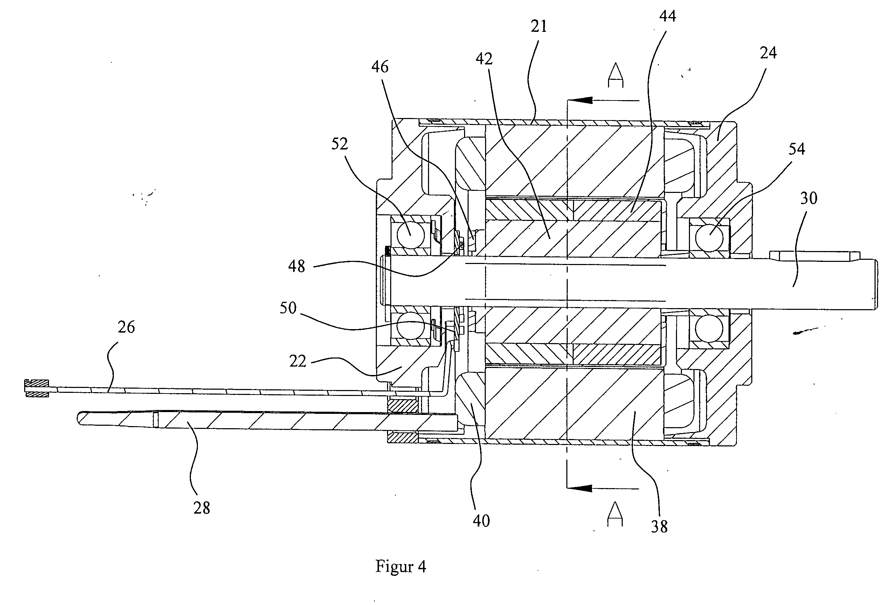

Der erfindungsgemäße Gleichstrommotor ist mit weiteren Einzelheiten in der Schnittdarstellung der Fig. 4 gezeigt. Auf die Welle 30 ist ein Rotorkörper oder -rückschluß 42 aufgebracht, welcher einen oder mehrere Permanentmagnete 44 trägt. Die Permanentmagnete 44 können in dem Rotorkern eingebettete Permanentmagnete oder ein ringförmiger, mehrpolig magnetisierter Permanentmagnet oder mehrere einzelne auf den Rotorkern 42 aufgebrachte Permanentmagnete sein. Der Rotorkörper 42 trägt ferner an einem Stirnende einen Steuermagneten 46 in Form einer ringförmigen Magnetbahn, die in Übereinstimmung mit dem/den Permanentmagneten 44 mit wechselnder Polarität magnetisiert ist. Sofern der/die Permanentmagnete 44, welche als Arbeitsmagnete dienen, ein ausreichend starkes Magnetfeld erzeugen, können diese zusätzlich die Funktion der Steuermagnete zum Abgeben von Drehlagesignalen an die Sensorvorrichtung übernehmen. Die Sensorvorrichtung wird bei der gezeigten Ausführung durch Hall-Sensoren 48 gebildet, welche auf eine Leiterplatte 50 aufgebracht sind. In einer Ausführung der Erfindung ist ein dreiphasiger Gleichstrommotor vorgesehen, wobei die Sensorvorrichtung drei um 120° (elektrisch) phasenversetzte Hall-Sensoren aufweist. Die Leiterplatte 50 ist ringförmig ausgestaltet, um die Welle 30 herum angeordnet und auf einem Träger gehalten. In der bevorzugten Ausführung der Erfindung wird dieser Träger durch den Flansch 22 gebildet.

Die Flansche 22 und 24 dienen ferner zum Aufnehmen von Lagern 52, 54 zur Lagerung der Welle 30, um eine Drehung des Rotors 42, 44 relativ zu dem Stator 38, 40 zu ermöglichen.

Bei dem erfindungsgemäßen Gleichstrommotor sind somit die Steuermagnete 46 drehfest mit dem Rotor 42, 44 verbunden, während die Sensorvorrichtung 48, insbesondere Hall-Sensoren, in dem Gehäuse des Gleichstrommotors in ihrer Lage fixiert sind. Der Stator 38, 40 ist in dem Gehäuserohr 21 gehalten und zusammen mit dem Gehäuserohr 21 relativ zu den feststehenden Flanschen 22, 24 verdrehbar, um die relative Lage von Sensoren 48 und Stator 38, 40 zu justieren.

Fig. 5 zeigt eine Querschnittdarstellung durch den Gleichstrommotor der Fig. 3 und 4 entlang der Linie A-A in Fig. 4. In der Darstellung der Fig. 5 ist der Flansch 22 im Verhältnis zu dem Statorkörper 38 und dem Rotorkörper 42 dargestellt. Der Statorkörper 38 umfaßt einen ringförmigen Statorrückschluß 56, von dem einzelne Statorhämmer 58 radial nach innen abstehen. Die Statorhämmer 58 bilden die Pole des Stators und tragen Phasenwicklungen 40, welche in Fig. 5 nicht dargestellt sind. Der Stator umgibt den Rotor 42 und die Permanentmagnete 44 des Rotors koaxial.

Der Rotor 42 besteht aus einzelnen radial magnetisierten Permanentmagneten 44, die auf den Rotorkörper 42 axial aufgeschoben sind und von Nuten gehalten werden, die jeweils zwischen zwei benachbarten Magneten 44 am äußeren Umfang des Rotorkörpers 42 ausgestaltet sind. Diese Nuten wirken den bei insbesondere großen Drehzahlen des Motors auftretenden Zentrifugalkräften entgegen. Vorzugsweise besteht der Rotorkörper 42 aus stanzpaketierten ferromagnetischen Blechen.

Weiterhin können die Permanentmagnete 44 auf dem Rotorkörper 42 mit Kunststoff umspritzt sein. Die dem Rotorkörper 42 zugewandte Seite der Permanentmagnete 44 ist vorzugsweise eben. Entsprechend besteht der Rotorkörper 42 aus einem zylindrischen Körper mit im wesentlichen N-eckiger Grundfläche, wobei N der Anzahl der Rotormagnete 44 entspricht, und mit N Nuten, die jeweils an den Kanten des zylindrischen Rotorkörpers 42 angeformt sind.

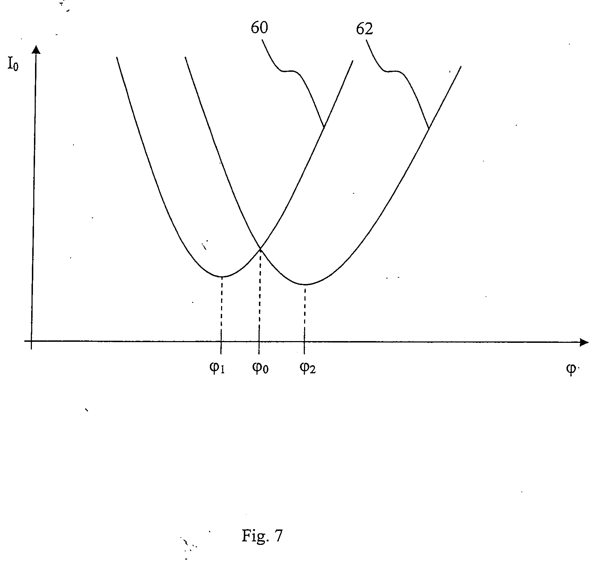

Die Sensorvorrichtung 48 wird in dem erfindungsgemäßen Gleichstrommotor wie folgt justiert. Auf die Statorwicklungen 40 wird ein Erregerstrom aufgeschaltet, um den Rotor 42, 44 zunächst in eine Richtung, z.B. gegen den Uhrzeigersinn (Linkslauf) zu drehen. Dabei wird der Motor vorzugsweise im Leerlauf betrieben. Während des Linkslaufs wird die mittlere Stromaufnahme I₀ in Abhängigkeit von dem Verdrehwinkel ϕ zwischen dem Flansch 22, welcher die Hall-Sensoren 48 trägt, und dem Statorkörper 38 ermittelt. Zu diesem Zweck wird das Gehäuserohr 21 zusammen mit dem Stator 38, 40 relativ zu dem Flansch 22 schrittweise verdreht, um den Verdrehwinkel ϕ zwischen den Hall-Sensoren 48 und dem Stator 38, 40 zu verändern und bei jedem Winkelschritt die mittlere Stromaufnahme I₀ des Motors zu erfassen. Der untersuchte Verdrehwinkel ϕ durchläuft dabei einen Winkelbereich von 360° geteilt durch die Anzahl der magnetischen Polpaare des Rotors, bei der gezeigten Ausführung 360° / 8 = 45°. Die mittlere Stromaufnahme I₀ in Abhängigkeit von dem Verdrehwinkel ϕ ist in Fig. 7 für den Linkslauf durch die Kurve 60 dargestellt, wobei die Kurve 60 bei dem Winkel ϕ₁ ein relatives Minimum aufweist. Eine entsprechende Kurve 62 der mittleren Stromaufnahme I₀ wird für den Rechtslauf des Motors ermittelt. Diese hat ein relatives Minimum bei dem Winkel ϕ₂, wobei im allgemeinen die Verdrehwinkel ϕ₁ und ϕ₂ unterschiedlich sind. Die Ursache für die Abweichung zwischen den Winkeln ϕ₁ und ϕ₂ liegt in den mechanischen Toleranzen des Motoraufbaus, insbesondere Toleranzen der Permanentmagnete des Rotors sowie der Statorsegmente, sowie Lagetoleranzen der Hall-Sensoren auf der Leiterplatte sowie einer Exzentrizität der Leiterplatte relativ zu dem Flansch, etc.

Während die Verdrehwinkel ϕ₁ und ϕ₂ als im wesentlichen optimal für den Linkslauf bzw. den Rechtslauf bezeichnet werden können, wird vorzugsweise ein optimaler Einstellwinkel zwischen Hall-Sensoren und Stator als ein Winkel ϕ₀ bestimmt, der zwischen den beiden für die jeweiligen Drehrichtungen des Motors optimalen Winkeln ϕ₁ und ϕ₂ liegt. Vorzugsweise wird der optimale Einstellwinkel ϕ₀ entweder als geometricher Mittelwert zwischen ϕ₁ und ϕ₂ oder als Schnittpunkt der beiden Kurven 60 und 62 bestimmt.

In der gefundenen Position wird das Gehäuserohr 21 an den Flanschen 22, 24 mit Hilfe der Madenschrauben fixiert, wie in Fig. 6 dargestellt. Sobald die Sensorvorrichtung justiert ist, können die relative Lage von Stator und Rotor bestimmt und die gewünschten Kommutierungssignale abgeleitet werden.

Die in der vorstehenden Beschreibung, den Ansprüchen und den Zeichnungen offenbarten Merkmale können sowohl einzeln als auch in beliebiger Kombination für die Verwirklichung der Erfindung in den verschiedenen Ausgestaltungen von Bedeutung sein.

### Bezugszeichenliste

- 10: Sternschaltung
- 12, 14, 16: Wicklungen
- 18: positive Versorgungsschiene
- 20: negative Versorgungsschiene
- 21: Gehäuserohr
- 22, 24: Flansch
- 26: Signalleitungen
- 28: Stromversorgung
- 30: Welle
- 32: Zentrierbund
- 34: Fixiervorrichtung
- 36: Nut
- 38: Statorkörper
- 40: Phasenwicklung
- 42: Rotorkörper oder -rückschluß
- 44: Permanentmagnete
- 46: Steuermagnete
- 48: Hall-Sensoren
- 50: Leiterplatte
- 52, 54: Kugellager
- 56: Statorrückschluß
- 58: Statorhammer
- 60, 62: Stromkurven

## Patentansprüche

1. Bürstenloser Gleichstrommotor mit
einem Stator (38), einem Rotor (42),
einem Steuermagneten (46), der mit dem Rotor (42) drehfest verbunden ist,
einer Sensorvorrichtung (48), die mit dem Steuermagneten (46) zur Erzeugung eines Kommutierungssignals zusammenwirkt,
wenigstens einem Trägerbauteil (22), das die Sensorvorrichtung (48) trägt, und
einer Haltevorrichtung (21) zum Aufnehmen des Stators (38), die mit dem Trägerbauteil (22) verbunden und relativ zu dem Trägerbauteil (22) verdrehbar ist, um die Lage der Sensorvorrichtung (48) relativ zu dem Stator (38) zu justieren.

2. Gleichstrommotor nach Anspruch 1, **dadurch gekennzeichnet, daß** die Haltevorrichtung ein Rohrstück (21) aufweist, in dem der Stator (38) drehfest aufgenommen ist.

3. Gleichstrommotor nach Anspruch 2, **dadurch gekennzeichnet, daß** das Rohrstück (21) in dem Trägerbauteil (22) drehbar gehalten ist.

4. Gleichstrommotor nach Anspruch 1, 2 oder 3, **dadurch gekennzeichnet, daß** das Rohrstück (21) Teil eines Gehäuses des Gleichstrommotors ist.

5. Gleichstrommotor nach einem der vorangehenden Ansprüche, **dadurch gekennzeichnet, daß** das Trägerbauteil (22) durch ein Flanschbauteil gebildet ist.

6. Gleichstrommotor nach Anspruch 5, **dadurch gekennzeichnet, daß** das Flanschbauteil (22) einen Zentrierbund (32) zum Aufnehmen der Haltevorrichtung (21) aufweist.

7. Gleichstrommotor nach einem der vorangehenden Ansprüche, **gekennzeichnet durch** Mittel (34) zum Fixieren der Haltevorrichtung (21) an dem Trägerbauteil (22).

8. Gleichstrommotor nach einem der vorangehenden Ansprüche, **dadurch gekennzeichnet, daß** das Trägerbauteil (22) eine polygonale, insbesondere quadratische Außenkontur hat.

9. Gleichstrommotor nach einem der vorangehenden Ansprüche, **dadurch gekennzeichnet, daß** die Sensorvorrichtung (48) auf eine Leiterplatte (50) aufgebracht ist, die an dem Trägerbauteil (22) befestigt ist.

10. Gleichstrommotor nach einem der vorangehenden Ansprüche, **dadurch gekennzeichnet, daß** die Sensorvorrichtung (48) Hallsensoren umfaßt.

11. Gleichstrommotor nach einem der vorangehenden Ansprüche, **dadurch gekennzeichnet, daß** die Steuermagnete (46) durch Arbeitsmagnete des Rotors oder durch separate Steuermagnete gebildet sind.

12. Verfahren zum Justieren einer Sensorvorrichtung in einem bürstenlosen Gleichstrommotor, der einen Stator, einen Rotor, einen Steuermagneten, der mit dem Rotor drehfest verbunden ist, die Sensorvorrichtung, die mit dem Steuermagneten zur Erzeugung eines Kommutierungssignals zusammenwirkt, wenigstens ein Flanschbauteil, das die Sensorvorrichtung trägt, und eine Haltevorrichtung zum Aufnehmen des Stators aufweist, mit folgenden Verfahrensschritten:
bei einer ersten relativen Lage der Sensorvorrichtung zum Stator: (a) Aufschalten eines Erregerstroms auf den Stator, um den Rotor zu drehen, und Erfassen der Stromaufnahme des Gleichstrommotors;
(b) Verdrehen der Haltevorrichtung und des darin gehaltenen Stators relativ zu dem Flanschbauteil, um die Lage der Sensorvorrichtung relativ zu dem Stator zu verändern, und
(c) Wiederholen des Schrittes (a) bei wenigstens einer zweiten relativen Lage der Sensorvorrichtung zum Stator, um eine im wesentlichen optimale relative Lage der Sensorvorrichtung zum Stator zu finden, bei der die Stromaufnahme im wesentlichen minimal ist; und
(d) Justieren der Sensorvorrichtung relativ zum Stator in der im wesentlichen optimalen relativen Lage.

13. Verfahren nach Anspruch 12, **dadurch gekennzeichnet, daß** im Schritt (b) die Haltevorrichtung innerhalb eines Winkelbereichs von 360 Grad geteilt durch die Anzahl der magnetischen Polpaare des Rotors gedreht wird.

14. Verfahren nach Anspruch 12 oder 13, **dadurch gekennzeichnet, daß** im Schritt (a) der Motor in eine erste Richtung gedreht wird, um eine erste optimale relative Lage für die erste Drehrichtung des Gleichstrommotors zu ermitteln, und daß in einem Schritt (a') der Motor in eine zweite Richtung gedreht wird und die Schritte (b) und (c) für diese zweite Drehrichtung wiederholt werden, um eine zweite optimale relative Lage für die zweite Drehrichtung des Gleichstrommotors zu ermitteln, und daß für das Justieren der Sensorvorrichtung relativ zum Stator eine im wesentlichen optimale relative Lage bestimmt wird, die zwischen der ersten und der zweiten optimalen relativen Lage liegt.

15. Verfahren nach Anspruch 12, 13 oder 14, **dadurch gekennzeichnet, daß** zum Justieren der Sensorvorrichtung im Schritt (d) die Haltevorrichtung an dem Flanschbauteil fixiert wird.
